# EUROPEAN PATENT APPLICATION

(11) **EP 4 475 077 A1**
(43) Date of publication of application: **11.12.2024**
(21) Application number: 24175738.4
(22) Date of filing: 14.05.2024
(51) Int. Cl.: G06T 7/33

(54) **THREE-DIMENSIONAL IMAGE DATA ALIGNMENT METHOD AND X-RAY IMAGING APPARATUS**

(30) Priority: 09.06.2023 JP 2023095899
(71) Applicant: Shimadzu Corporation, Nakagyo-ku, Kyoto-shi, Kyoto 604-8511 (JP)
(72) Inventor: ONISHI, Shuhei, Kyoto-shi, Kyoto, 604-8511 (JP)
(74) Representative: Müller-Boré & Partner Patentanwälte PartG mbB

(57) **Abstract**

A three-dimensional image data alignment method according to this invention includes a step of generating a first CT data set (23) based on a first X-ray image data set (22), and a second CT data set (25) based on a second X-ray image data set (24); and a step of aligning the first CT data set (23) with the second CT data set (25) based on positioning elements (30) included in the first CT data set (23) and the second CT data set (25).

## Description

### BACKGROUND OF THE INVENTION

### Field of the Invention

The present invention relates to a three-dimensional image data alignment method and an X-ray imaging apparatus.

### Description of the Background Art

Three-dimensional image data alignment methods for aligning first CT data generated based on a first X-ray image with second CT data generated based on a second X-ray image including an area overlapping an imaging area of the first CT data are known in the art. Such an apparatus is disclosed in Japanese Patent Laid-Open Publication No. JP 2014-61278, for example.

The above Japanese Patent Laid-Open Publication No. JP 2014-61278 discloses an imaging method by using an X-ray CT apparatus (X-ray imaging apparatus) for capturing an image (first X-ray image) by irradiating a part of an object to be inspected with X-rays, and then moving the object to be inspected in a rostrocaudal direction by a predetermined distance while stopping the irradiation of X-rays to capture another image (second X-ray image) by irradiating another part of the object to be inspected with X-rays. The images of the parts of the object to be inspected are captured to include overlapping areas (superposed areas) to be used for generation of a composite image in the X-ray CT apparatus disclosed in the above Japanese Patent Laid-Open Publication No. JP 2014-61278. An image of a wide area of the object to be inspected is obtained by repeatedly moving the object to be inspected and capturing images of parts of the object to be inspected so as to combine the images of parts of the object to be inspected in the X-ray CT apparatus disclosed in the above Japanese Patent Laid-Open Publication No. JP 2014-61278.

Although it is not stated in the above Japanese Patent Laid-Open Publication No. JP 2014-61278, it can be conceived that the X-ray CT device (X-ray imaging apparatus) disclosed in the above Japanese Patent Laid-Open Publication No. JP 2014-61278 is a medical X-ray imaging apparatus. Not only in such medical X-ray imaging apparatuses but also in measurement X-ray imaging apparatuses, entire CT data of a subject is acquired by repeatedly moving an image capturing part and capturing images of parts of the subject so as to combine CT data sets of the parts of the subject. The images of the parts of the subject are captured to include overlapping areas to be used for generation of a composite image.

However, in a case in which the CT data sets of the parts of the subject is combined, it is difficult to obtain relative positional relationships between the CT data sets of the parts of the subject because of an inclination of a subject placement part on which the subject is placed, movement (drift) of an X-ray focus caused by deformation of an X-ray tube due to its thermal expansion, and the like. In a technique so-called best-fit technique in which with respect to one shape data set another shape data set is translated or rotated to move the another shape data set so as to minimize a relative distance between the one shape data set and the another shape data set, influence on alignment is increased as a shape of a subject increases. In this case, because a path length of X-rays passing through the subject is increase as the shape of the subject increases, errors can be more likely to occur in a surface shape due to artifacts. Because the best-fit technique uses shape data, which can include errors in combination of CT data sets, it is difficult to align shape data sets in some cases. As discussed above, in a case in which CT data set of parts of the subject are combined to generate CT data of the entire subject, it is difficult to align the CT data sets of the parts of the subject in some cases. For this reason, it is desired to accurately align a plurality of CT data sets.

### SUMMARY OF THE INVENTION

The present invention is intended to solve the above problem, and one object of the present invention is to provide a three-dimensional image data alignment method and an X-ray imaging apparatus capable of accurately align a plurality of CT data sets.

In order to attain the aforementioned object, a three-dimensional image data alignment method according to a first aspect of the present invention includes a step of generating a three-dimensional first CT data set based on a first X-ray image data set acquired by X-ray imaging of a first part of a subject together with at least three positioning elements having isotropic shapes; a step of generating a three-dimensional second CT data set based on a second X-ray image data set acquired by X-ray imaging of a second part of the subject that includes an overlapping area overlapping an imaging area of the first CT data set and a part of the first part together with the at least three positioning elements positioned in the overlapping area; and a step of aligning the first CT data set with the second CT data set based on the positioning elements having the isotropic shapes and included in the first CT data set and the second CT data set.

An X-ray imaging apparatus according to a second aspect of the present invention includes an image capturer including an X-ray source configured to irradiate a subject with X-rays and a detector configured to detect the X-rays with which the subject is irradiated by the X-ray source for imaging of the subject; and an image processor configured to generate CT data based on a plurality of X-ray image data sets of the imaging of the subject at a plurality of angles corresponding to different relative angles between the subject and the image capturer, wherein the image processor is configured to generate a three-dimensional first CT data set based on a first X-ray image data set acquired by X-ray imaging of a first part of the subject together with at least three positioning elements having isotropic shapes by using the image capturer, to generate a three-dimensional second CT data set based on a second X-ray image data set acquired by X-ray imaging of a second part of the subject that includes an overlapping area overlapping an imaging area of the first CT data set and a part of the first part together with the at least three positioning elements positioned in the overlapping area by using the image capturer, and to align the first CT data set with the second CT data set based on the positioning elements having the isotropic shapes and included in the first CT data set and the second CT data set.

In the three-dimensional image data alignment method according to the first aspect and the X-ray imaging apparatus according to the second aspect, as discussed above, a three-dimensional first CT data set is generated based on a first X-ray image data set acquired by X-ray imaging of a first part of the subject together with at least three positioning elements having isotropic shapes by using the image capturer; a three-dimensional second CT data set is generated based on a second X-ray image data set acquired by X-ray imaging of a second part of the subject that includes a part of the first part together with the at least three positioning elements positioned in the overlapping area by using the image capturer; and the first CT data set is aligned with the second CT data set based on the positioning elements having the isotropic shapes and included in the first CT data set and the second CT data set. Accordingly, even if positions of parts of a subject is deviated between CT data sets due to an inclination of a subject placement part, movement (drift) of an X-ray focus, or the like, the first CT data set can be accurately aligned with the second CT data set based on the at least three positioning elements positioned in the overlapping area overlapping between the first CT data set and the second CT data set. Also, in the first and second CT data sets generated based on the X-ray image data sets acquired by X-ray imaging of the subject while rotating the positioning elements, because each positioning element has an isotropic shape, a center position of each positioning element can be accurately acquired. Accordingly, the first CT data set can be accurately aligned with the second CT data set based on the positioning elements each of which has the isotropic shape as compared with the best-fit technique, which can include errors in shape data. For these reasons, it is possible to accurately align the first CT data set with the second CT data set. Consequently, it is possible to accurately align a plurality of CT data sets.

### BRIEF DESCRIPTION OF THE DRAWINGS

FIG. 1 is a block diagram showing an exemplary X-ray imaging apparatus according to one embodiment.
FIG. 2 is a schematic view illustrating acquisition of a first X-ray image data set.
FIG. 3 is a schematic view illustrating acquisition of a second X-ray image data set.
FIG. 4 is a schematic perspective view showing an exemplary positioning tool and exemplary positioning elements.
FIG. 5 is a schematic plan view showing the exemplary positioning tool and the exemplary positioning elements.
FIG. 6 is a view illustrating a process of acquiring first position information.
FIG. 7 is a view illustrating a process of acquiring second position information.
FIG. 8 is a flowchart illustrating alignment processing between a first CT data set and a second CT data set.
FIG. 9 is a schematic perspective view showing an exemplary positioning tool and exemplary positioning elements according to a first modified embodiment.
FIG. 10 is a schematic view showing an exemplary positioning tool and exemplary positioning elements according to a second modified embodiment.
FIG. 11 is a schematic view showing another exemplary positioning tool and other exemplary positioning elements according to the second modified embodiment.
FIG. 12 is a schematic view showing an exemplary positioning tool and exemplary positioning elements according to a third modified embodiment.

### DESCRIPTION OF THE PREFERRED EMBODIMENT

Embodiments embodying the present invention will be described with reference to the drawings.

### (Entire Configuration of X-Ray Imaging Apparatus)

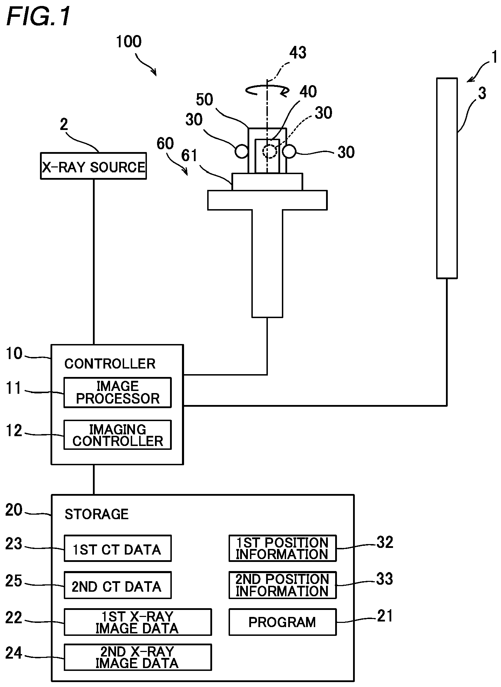

An entire configuration of an X-ray imaging apparatus 100 according to an embodiment is now described with reference to FIGS. 1 to 7.

As shown in FIG. 1, the X-ray imaging apparatus 100 includes an image capturer 1, a controller 10, a storage 20, and a movement/rotation mechanism 60. The image capturer 1 includes an X-ray source 2 and a detector 3. The controller 10 includes an image processor 11 and an imaging controller 12.

The X-ray source 2 is configured to irradiate a subject 40 with X-rays. Specifically, the X-ray source 2 is configured to produce X-rays by colliding electrons generated by applying a high voltage to an electrode against a target. The X-ray source 2 is an X-ray producing device including an X-ray tube and a power supply, for example.

The detector 3 is configured to detect the X-rays with which the subject is irradiated by the X-ray source 2. The detector 3 is configured to convert the detected X-rays into electrical signals (image signals). The detector 3 includes an X-ray receiver configured to receive the X-rays, and a transducer configured to convert the received X-rays into an image signal. The detector 3 is a flat panel detector (FPD), for example. The detector 3 includes a plurality of converters (not shown), and a plurality of pixel electrodes (not shown) arranged on the plurality of converters. The image signal of the detector 3 is transmitted to the image processor 11.

The controller 10 is constructed of a processor, such as CPU (Central Processing Unit), FPGA (Field-Programmable Gate Array), and ASIC (Aplication Specific Integrated Circuit). The controller 10 as hardware includes the image processor 11 and the imaging controller 12 as functional blocks of software (program). The controller 10 serves as the image processor 11 and the imaging controller 12 by executing program 21 stored in the storage 20. The image processor 11 and the imaging controller 12 can be individually constructed of a dedicated processor (processing circuit) as hardware.

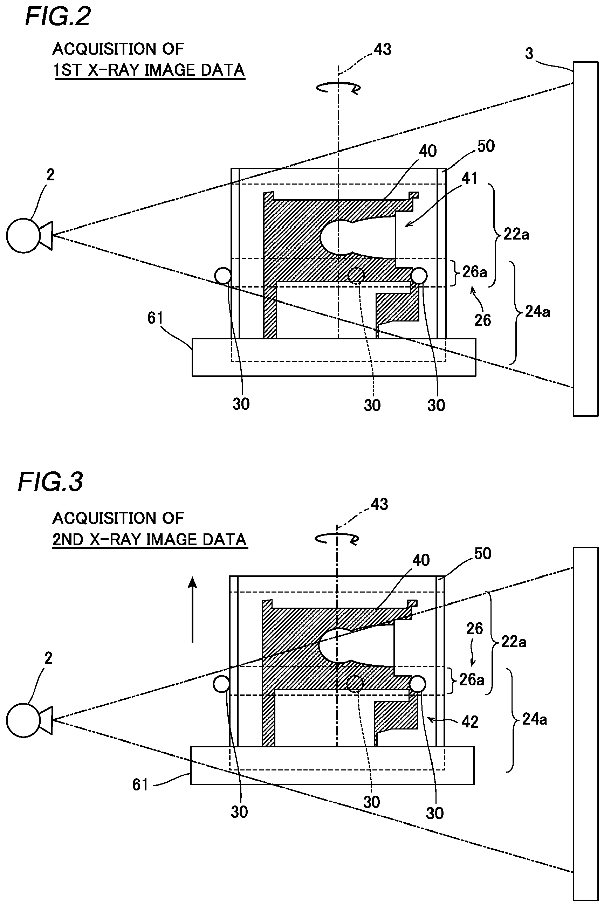

The image processor 11 is configured to control the detector 3. As shown in FIG. 2, the image processor 11 is configured to acquire first X-ray image data sets 22 based on the X-rays detected by the detector 3 in X-ray imaging of a first part 41 of the subject 40 together with three positioning elements 30 each of which has an isotropic shape. Also, the image processor 11 is configured to acquire a plurality of first X-ray image data sets 22 that are captured while the subject 40 is rotated about an axis 43 by the movement/rotation mechanism 60. Also, the image processor 11 is configured to generate a first CT data set 23 based on the plurality of first X-ray image data sets 22 acquired. In other words, the image processor 11 is configured to generate the first CT data set 23 based on the plurality of first X-ray image data sets 22 of imaging of the subject at a plurality of angles corresponding to different relative angles between the subject 40 and the image capturer 1.

As shown in FIG. 3, the image processor 11 is configured to acquire second X-ray image data sets 24 based on the X-rays detected by the detector 3 in X-ray imaging of a second part 42 of the subject 40 that includes an overlapping area 26 overlapping an imaging area of the first CT data set 23 and a part of the first part 41 together with the three positioning elements 30 arranged in the overlapping area 26. The overlapping area 26, which overlaps the imaging area of the first CT data set 23, includes a first area 26a overlapping the imaging area of the first CT data set in the axis 43 direction of a rotation axis of the subject 40 orthogonal to a linear line that connects the X-ray source 2 to the detector 3. Also, the image processor 11 is configured to acquire a plurality of second X-ray image data sets 24 that are captured while the subject 40 is rotated about the axis 43 by the movement/rotation mechanism 60. Also, the image processor 11 is configured to generate a second CT data set 25 based on the plurality of second X-ray image data sets 24 acquired. In other words, the image processor 11 is configured to generate the second CT data set 25 based on the plurality of second X-ray image data set 24 of imaging of the subject at a plurality of angles corresponding to different relative angles between the subject 40 and the image capturer 1.

In this embodiment, as shown in FIG. 2, the first X-ray image data sets 22 corresponding to the first part 41, which is an upper part of the subject 40, are acquired by X-ray imaging of the first part 41, which is the upper part of the subject 40 as the imaging area, together with the three positioning elements 30. As shown in FIG. 3, the second X-ray image data sets 24 are acquired by X-ray imaging of the second part 42, which is a lower part of the subject 40 and includes a part of the upper part of the subject 40 as the imaging area, together with the three positioning elements 30 arranged in the overlapping area 26.

Also, the image processor 11 is configured to align the first CT data set 23 with the second CT data set 25 based on the positioning elements 30 having the isotropic shapes and included in the first CT data set 23 and the second CT data set 25. In other words, the image processor 11 can align the first CT data set 23 with the second CT data set 25 in the overlapping area 26 between the first and second CT data sets based on the positioning elements 30, and can combine the first CT data set 23 and the second CT data set 25 together so as to acquired CT data of the entire subject 40.

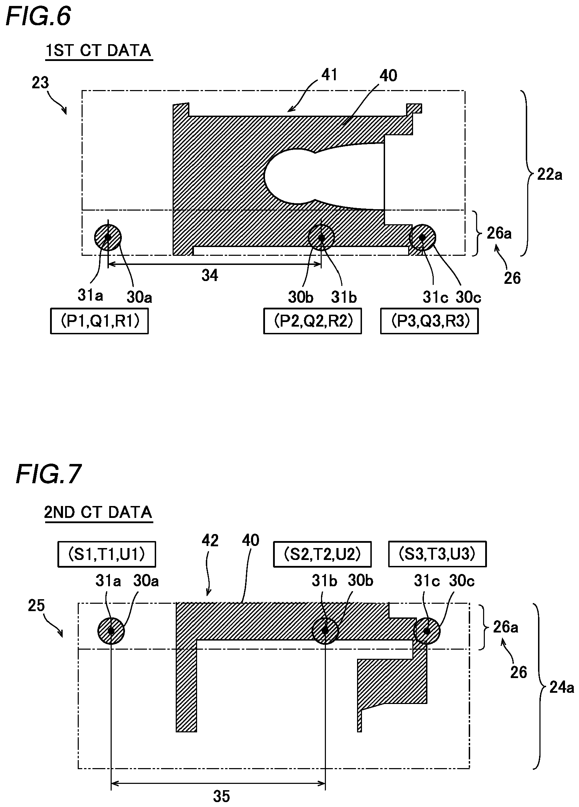

Also, in a case in which a magnification factor of the images of the subject 40 in the first CT data set 23 disagrees with a magnification factor of the images of the subject 40 in the second CT data set 25, the image processor 11 is configured to acquire a first distance 34 (see FIG. 6) between at least two positioning elements 30 in the three positioning elements 30 in the first CT data set 23 and a second distance 35 (see FIG. 7) between the at least two positioning elements 30 corresponding to the first distance 34 in the second CT data set 25; and the image processor 11 is configured to align the first CT data set 23 with the second CT data set 25 by enlarging or reducing at least one of the first CT data set 23 and the second CT data set 25 so as to make the first distance 34 agree with the second distance 35.

As shown in FIG. 1, the imaging controller 12 is configured to control operations of the X-ray source 2. Also, the imaging controller 12 is configured to control the movement of the movement/rotation mechanism 60. The imaging controller 12 includes a control device for controlling the X-ray source 2 and a control device for controlling the movement/rotation mechanism 60. The imaging controller 12 is configured to control start and stop of irradiation of the subject with the X-rays from the X-ray source 2 in acquisition of the plurality of first X-ray image data sets 22 and in acquisition of the plurality of second X-ray image data sets 24, and to control the movement/rotation mechanism 60 so as to position the subject 40 at positions corresponding to a plurality of imaging angles from one after another. Also, the imaging controller 12 is configured to control the movement/rotation mechanism 60 so as to move the subject 40 in a vertical direction in order to acquire the plurality of second X-ray image data sets 24 after acquiring the plurality of first X-ray image data sets 22.

The storage 20 includes a non-volatile storage device. For example, the non-volatile storage device is a hard disk drives, solid state drives, or the like. The storage 20 is configured to store various programs 21 to be executed by the processor. Also, the storage 20 is configured to store the plurality of first X-ray image data sets 22, and the first CT data set 23 generated based on the plurality of first X-ray image data sets 22. Also, the storage 20 is configured to store the plurality of second X-ray image data sets 24, and the second CT data set 25 generated based on the plurality of second X-ray image data sets 24.

In this embodiment, the first X-ray image data sets 22 and the second X-ray image data sets 24 of the subject 40 and the positioning elements 30 are acquired by X-ray imaging with the positioning tool 50, which includes the three positioning elements 30, being arranged on the subject placement part 61 on which the subject 40 is placed. Subsequently, the image processor 11 generates the first CT data set 23 based on the plurality of first X-ray image data sets 22, and the second CT data set 25 based on the plurality of second X-ray image data sets 24. The image processor 11 then aligns the first CT data set 23 with the second CT data set 25 based on centers 31 of the three positioning elements 30. The centers 31 of the positioning elements 30 are examples of "centers of the positioning elements" in the claims.

The movement/rotation mechanism 60 is configured to rotate the subject 40 about the axis 43. The movement/rotation mechanism 60 includes the subject placement part 61 on which the subject 40 is placed, a rotating part (not shown) configured to rotate the subject placement part 61, a rotational driving part configured to apply a driving force to the rotating part, a moving part (not shown) configured to translate the subject placement part 61 in the vertical direction, and a translational driving part (not shown) configured to apply a driving force to the moving part. The rotational driving part and the translational driving part include electric motors, for example.

### (Positioning Tool and Positioning Elements)

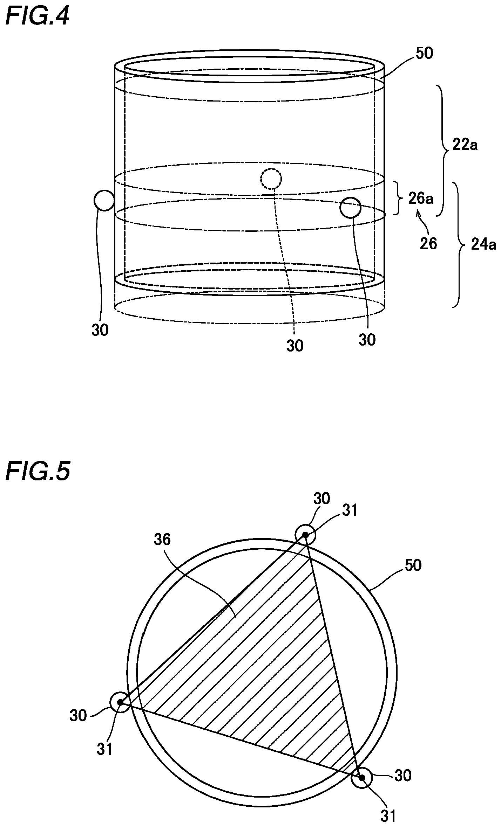

As shown in FIG. 4, the positioning tool 50 is configured to securely hold the positioning elements 30. The positioning tool 50 is arranged on the subject placement part 61 (see FIG. 1). The positioning tool 50 is arranged on the subject placement part 61 to surround the subject 40. The positioning tool 50 is formed of a cylindrical tubular element. When the subject placement part 61 on which the subject 40 placed is moved toward one side in the vertical direction by the moving part, the positioning tool 50 is moved together with the subject 40 toward the one side in the vertical direction.

The positioning tool 50 is formed of a CFRP pipe, for example. A material of the positioning tool 50 is not limited as long as it has X-ray transmittance. In a case in which the material of the positioning tool 50 has a high X-ray transmittance, it is possible to reduce influence of a shadow of the positioning tool 50 in the X-ray image.

The three positioning elements 30 are fixed on an exterior surface of the positioning tool 50. Accordingly, relative positions of the positioning elements 30 do not change at least until the X-ray imaging is completed. Although an exemplary means for fixing the positioning elements 30 to the positioning tool 50 can be provided by adhesive fixation, screw fixation, or the like, the means for fixing is not limited as long as the positioning elements 30 can be fixed on the positioning tool 50.

As shown in FIGS. 2 and 3, the positioning elements 30 are positioned at positions corresponding to the overlapping area 26 in which the imaging area of the first CT data set 23 (an imaging area 22a of the first X-ray image data sets 22) overlaps the imaging area of the second CT data set 25 (an imaging area 24a of the second X-ray image data sets 24) in the positioning tool 50. As shown in FIG. 5, the centers 31 of the three positioning elements 30 are not aligned on one linear line but lie in one plane 36 that is defined by the three centers 31. The one plane 36, which is defined by the centers 31 of the three positioning elements 30, can be parallel to a horizontal plane or can intersect the horizontal plane.

Also, the three positioning elements 30 are arranged at substantially 120-degree intervals on the exterior surface of the positioning tool 50 as viewed in a flat view. The intervals between the three positioning elements 30 positioned on the exterior surface of the positioning tool 50 are not limited to substantially 120 degrees, but can be any degrees.

In the arrangement of the positioning elements 30 on the positioning tool 50, the entire positioning elements 30 are included in the overlapping area 26. Although discussed in more detail later, the image processor 11 acquires position information (first position information 32) of the centers 31 of the positioning elements 30 in a first coordinate system, and position information (second position information 33) of the centers 31 of the positioning elements 30 in a second coordinate system. Although discussed in more detail later, each positioning element 30 has a spherical shape. Because the spherical shape can be accurately measured even if it is small, a size of the positioning element 30 can be reduced to a degree that does not affect the first CT data set 23 and the second CT data set 25. For example, no problem will arise in a case in which an occupancy ratio of one of the positioning elements 30 is not greater than one-twentieth in a horizontal direction of the overlapping area 26 between the imaging area of the first CT data set 23 (an imaging area 22a of the first X-ray image data sets 22) and the imaging area of the second CT data set 25 (an imaging area 24a of the second X-ray image data sets 24) as shown in FIGS. 2 and 3. Note that the illustrated size of each positioning element 30 is different from its actual size for sake of illustration.

As shown in FIGS. 4 and 5, each positioning element 30 has the isotropic shape. Specifically, the positioning element 30 has a point-symmetrical shape symmetric with respect to the center of the positioning element 30 as the isotropic shape. More specifically, each positioning element 30 has the spherical shape as the point-symmetrical shape. The isotropic shape refers to a shape that does not have a particular direction (has no directionality), or have a small directionality of the positioning element 30.

Each positioning element 30 is formed of a material with an X-ray transmittance equal to or similar to a material of the subject 40. Each positioning element 30 is formed of ceramics, for example. The material of each positioning element 30 is not limited to ceramics but can be metal, such as aluminum or iron, or resin, for example. It is preferable that a specific gravity of the material of each positioning element 30 is smaller than a specific gravity of the material of the subject 40. The reason is that if the specific gravity of the material of each positioning element 30 is greater than the specific gravity of the material of the subject 40, artifacts (noises) can occur due to a high absorption coefficient of the positioning element 30.

### (Acquisition of First X-Ray Image Data and Generation of First CT Data)

Acquisition of the first X-ray image data sets 22 and the generation of the first CT data set 23 are now described with reference to FIG. 2.

The subject 40 is placed on the subject placement part 61. The cylindrical positioning tool 50 is arranged on the subject placement part 61 to surround the subject 40. The positioning tool 50 has a cylindrical shape. The positioning tool 50 is not limited to the cylindrical shape, but can be a rectangular tube shape.

The three positioning elements 30 are fixed on the exterior surface of the positioning tool 50. The three positioning elements 30 are positioned in an area corresponding to the overlapping area 26 in which the imaging area of the first CT data set 23 (the imaging area 22a of the first X-ray image data sets 22) overlaps the imaging area of the second CT data set 25 (the imaging area 24a of the second X-ray image data sets 24) in the positioning tool 50. The first part 41 of the subject 40 is set as the imaging area 22a of the first X-ray image data sets 22. The moving part moves the subject placement part 61 in the vertical direction so that the first part 41 of the subject 40 corresponds to the imaging area.

Subsequently, X-ray images of the subject 40 are captured by the image capturer 1 at predetermined imaging angles while changing the imaging angle of the subject 40 by the rotation mechanism. The X-ray images of the first part 41 of the subject 40 are captured together with the three positioning elements 30. The image processor 11 acquires (generates) the first X-ray image data sets 22 based on the detection signals (image signals) of the detector 3 at the predetermined imaging angles. The first X-ray image data sets 22 are captured at the predetermined imaging angles over a predetermined angle range.

The image processor 11 (see FIG. 1) is configured to generate the first CT data set 23 based on the plurality of first X-ray image data sets 22 acquired. The image processor 11 applies reconstruction processing the plurality of first X-ray image data sets 22 required for one CT scan corresponding to the imaging angles to generate the first CT data set 23. The first CT data set 23 is an image representing a three-dimensional structure of the first part 41 of the subject 40. The first CT data set 23 can be a tomographic image, a three-dimensional image, or the like of the first part 41 of the subject 40.

### (Acquisition of Second X-Ray Image Data and Generation of Second CT Data)

Acquisition of the second X-ray image data sets 24 and the generation of the second CT data set 25 are now described with reference to FIG. 3. In this embodiment, after the plurality of first X-ray image data sets 22 are acquired, the plurality of second X-ray image data sets 24 are acquired.

The second part 42 of the subject 40 is set as the imaging area 24a of the second X-ray image data sets 24. The second part 42 of the subject 40 includes a part of the first part 41 of the subject 40. In other words, the part the first part 41 of the subject 40 in the second part 42 of the subject 40 is the overlapping area 26. In order to acquire the plurality of second X-ray image data sets 24 after the plurality of first X-ray image data sets 22 are acquired, the subject placement part 61 is moved upward along the axis 43 of the rotation axis of the subject 40 by the moving part so that the second part 42 of the subject 40 corresponds to the imaging area.

Subsequently, X-ray images of the subject 40 are captured by the image capturer 1 at predetermined imaging angles while changing the imaging angle of the subject 40 by the rotation mechanism. The X-ray images of the second part 42 of the subject 40 are captured together with the three positioning elements 30. Acquisition of the second X-ray image data sets 24 and generation of the second CT data set 25 by the image processor 11 are similar to the acquisition of the first X-ray image data sets 22 and the generation of the first CT data set 23, and their description is omitted.

### (Acquisition of Center Position of Positioning Element)

The image processor 11 acquires the shapes of the positioning element 30 in the first CT data set 23 and the second CT data set 25. In this embodiment, the image processor 11 identifies the shapes of the positioning elements 30. Any technique can be used by the image processor 11 to identify the shapes of the positioning elements 30. The first CT data set 23 is data representing a three-dimensional shape of the subject 40 in the first coordinate system defined by a P-axis, a Q-axis, and an R-axis. The second CT data set 25 is data representing a three-dimensional shape of the subject 40 in the second coordinate system defined by an S-axis, a Taxis, and a U-axis.

As shown in FIG. 6, the image processor 11 acquires the first position information 32 (see FIG. 1) of the positioning elements 30 in the first coordinate system. The image processor 11 acquires the first position information 32, which is the position information of the positioning elements 30 in the first CT data set 23, based on the isotropic shapes of the positioning elements 30 in the first CT data set 23. The first position information 32 includes position information of the centers 31 of the positioning elements 30 in the first coordinate system. The centers 31 of the positioning elements 30 in the first CT data set 23 are acquired by using a known technique by the image processor 11, and the acquisition technique is not limited.

Each positioning element 30 has the spherical shape, which is the isotropic shape. Accordingly, the image processor 11 can accurately acquire the position information (first position information 32) of the centers 31 of the positioning elements 30 in the first coordinate system. The image processor 11 acquires position coordinates (P1, Q1, R1) of a center 31a in the first coordinate system as the first position information 32 of a positioning element 30a. Also, the image processor 11 acquires position coordinates (P2, Q2, R2) of a center 31b in the first coordinate system as the first position information 32 of a positioning element 30b. Also, the image processor 11 acquires position coordinates (P3, Q3, R3) of a center 31c in the first coordinate system as the first position information 32 of a positioning element 30c. The first position information 32 acquired is stored in the storage 20 (see FIG. 1).

As shown in FIG. 7, the image processor 11 acquires the second position information 33 (see FIG. 1) of the positioning elements 30 in the second coordinate system. The second position information 33 includes position information of the centers 31 of the positioning elements 30 in the second coordinate system. The centers 31 of the positioning elements 30 in the second CT data set 25 are acquired by using a known technique by the image processor 11, and the acquisition technique is not limited. The image processor 11 acquires position coordinates (S1, T1, U1) of the center 31a in the second coordinate system as the second position information 33 of the positioning element 30a. Also, the image processor 11 acquires position coordinates (S2, T2, U2) of the center 31b in the second coordinate system as the second position information 33 of the positioning element 30b. Also, the image processor 11 acquires position coordinates (S3, T3, U3) of the center 31c in the second coordinate system as the second position information 33 of the positioning element 30c. The first position information 33 acquired is stored in the storage 20 (see FIG. 2).

### (Agreement of Subject Magnification of First CT Data with Subject Magnification of Second CT Data)

The image processor 11 acquires at least one of a distance between the center 31a of the positioning element 30a and the center 31b of the positioning element 30b, a distance between the center 31a of the positioning element 30a and the center 31c of the positioning element 30c, and a distance between the center 31b of the positioning element 30b and the center 31c of the positioning element 30c in the first coordinate system based on the first position information 32 in the first CT data set 23. In this embodiment, the image processor 11 acquires a linear distance between the center 31a of the positioning element 30a and the center 31b of the positioning element 30b in the first coordinate system as the first distance 34 (see FIG. 6) based on the first position information 32 in the first CT data set 23.

Also, the image processor 11 acquires at least one of a distance between the center 31a of the positioning element 30a and the center 31b of the positioning element 30b, a distance between the center 31a of the positioning element 30a and the center 31c of the positioning element 30c, and a distance between the center 31b of the positioning element 30b and the center 31c of the positioning element 30c in the second coordinate system based on the second position information 33 in the second CT data set 25. In this embodiment, the image processor 11 acquires a linear distance between the center 31a of the positioning element 30a and the center 31b of the positioning element 30b in the second coordinate system as the second distance 35 (see FIG. 7) based on the second position information 33 in the second CT data set 25.

Subsequently, if the first distance 34 in the first CT data set 23 does not agree with the second distance 35 in the second CT data set 25, the image processor 11 enlarges or reduces at least one of the first CT data set 23 and the second CT data set 25 so as to make the first distance 34 agree with the second distance 35. Accordingly, the subject magnification of the first CT data set 23 agrees with the subject magnification of the second CT data set 25. In this embodiment, the image processor 11 is configured to enlarge or reduce the second CT data set 25 to make the second distance 35 in the second CT data set 25 agree with the first distance 34 in the first CT data set 23. Here, the image processor 11 converts the second position information 33 in the second CT data set 25 in accordance with the enlargement or reduction of the second CT data set 25. Alternatively, the image processor 11 can be configured to enlarge or reduce the first CT data set 23 to make the first distance 34 in the first CT data set 23 agree with the second distance 35 in the second CT data set 25.

### (Alignment Between First and Second CT Data Sets)

The image processor 11 aligns the first CT data set 23 with the second CT data set 25 based on the first position information 32 and the second position information 33.

Specifically, the image processor 11 aligns the first CT data set 23 with the second CT data set 25 by matching positions in the first position information 32 to positions in the second position information 33. In other words, the image processor 11 matches the position coordinates of the center 31a (P1, Q1, R1) in the first CT data set 23 to the position coordinates (S1, T1, U1) of the center 31a in the second CT data set 25. Also, the image processor 11 matches the position coordinates of the center 31b (P2, Q2, R2) in the first CT data set 23 to the position coordinates (S2, T2, U2) of the center 31b in the second CT data set 25. Also, the image processor 11 matches the position coordinates of the center 31c (P3, Q3, R3) in the first CT data set 23 to the position coordinates (S3, T3, U3) of the center 31c in the second CT data set 25. As a result, the first CT data set 23 is aligned with the second CT data set 25.

If the image processor 11 converts the second position information 33 in the second CT data set 25 in accordance with the enlargement or reduction of the second CT data set 25, the image processor 11 aligns the first CT data set 23 with the second CT data set 25 by matching the positions in the first position information 32 to positions converted in the second position information 33.

### (Alignment Processing Between First and Second CT Data Sets)

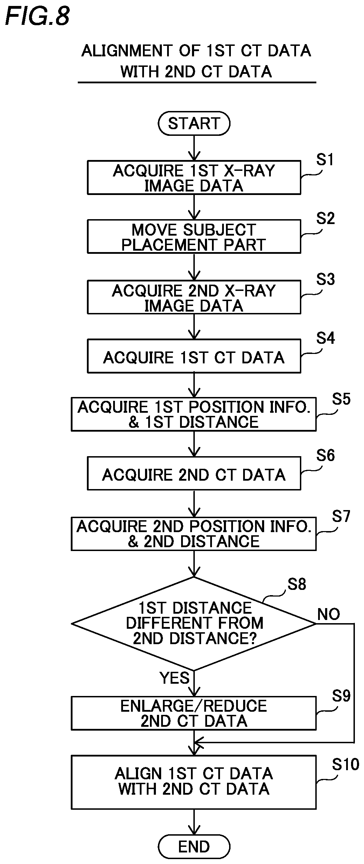

Alignment processing between the first CT data set 23 and the second CT data set 25 according to this embodiment is now described with reference to FIG. 8. The imaging controller 12 controls imaging operations. The image processor 11 executes acquisition of the first X-ray image data sets 22, acquisition of the second X-ray image data sets 24, generation of the first CT data set 23, generation of the second CT data set 25, and alignment between the first CT data set 23 and the second CT data set 25. Order of processing steps can be changed, or the processing steps simultaneously executed as long as they do not conflict with each other.

In step S1, the image processor 11 acquires the plurality of first X-ray image data sets 22 by executing a plurality of X-ray imaging operations for capturing a plurality of images of the first part 41 of the subject 40 together with the three positioning elements 30 while rotating the subject 40 about the axis 43. Subsequently, the procedure goes to step S2.

In step S2, the imaging controller 12 directs moving part to move the subject placement part 61 upward along the axis 43 of the rotation axis of the subject 40 so that the second part 42 of the subject 40 corresponds to the imaging area. Subsequently, the procedure goes to step S3.

In step S3, the image processor 11 acquires the plurality of second X-ray image data sets 24 by executing a plurality of X-ray imaging operations for capturing the second part 42 of the subject 40 that includes the overlapping area 26 overlapping an imaging area of the first CT data set 23 (the first X-ray image data sets 22) and the part of the first part 41 together with the three positioning elements 30 arranged in the overlapping area 26 while rotating the subject 40 about the axis 43. Subsequently, the procedure goes to step S4.

In step S4, the image processor 11 generates the first CT data set 23 based on the plurality of first X-ray image data sets 22. Subsequently, the procedure goes to step S5.

In step S5, the image processor 11 acquires the first position information 32 of the centers 31 of the positioning elements 30 in the first coordinate system based on the first CT data set 23, and acquires the first distance 34 in the first coordinate system. Subsequently, the procedure goes to step S6.

In step S6, the image processor 11 generates the second CT data set 25 based on the plurality of second X-ray image data sets 24. Subsequently, the procedure goes to step S7.

In step S7, the image processor 11 acquires the second position information 33 of the centers 31 of the positioning elements 30 in the second coordinate system based on the second CT data set 25, and acquires the second distance 35 in the second coordinate system. Subsequently, the procedure goes to step S8.

In step S8, if the image processor 11 determines that the first distance 34 in the first CT data set 23 disagrees with the second distance 35 in the second CT data set 25 (Yes in step S8), the procedure goes to step S9, and if the image processor determines that the first distance 34 in the first CT data set 23 agrees with the second distance 35 in the second CT data set 25 (No in step S8), the procedure goes to step S10.

In step S9, the image processor 11 enlarges or reduces the second CT data set 25 so as to make the second distance 35 in the second CT data set 25 agree with the first distance 34 in the first CT data set 23. Accordingly, the subject magnification of the first CT data set 23 agrees with the subject magnification of the second CT data set 25. In addition, the image processor 11 converts the second position information 33 in the second CT data set 25 in accordance with the enlargement or reduction of the second CT data set 25.

In step S10, the image processor 11 aligns the first CT data set 23 with the second CT data set 25 by matching the positions in the first position information 32 to the positions in the second position information 33. After that the procedure ends.

### (Advantages of the Embodiment)

In this embodiment, the following advantages are obtained.

In this embodiment, as described above, a three-dimensional image data alignment method includes a step of generating a three-dimensional first CT data set 23 based on a first X-ray image data set 22 acquired by X-ray imaging of a first part 41 of a subject 40 together with three positioning elements 30 having isotropic shapes by using an image capturer 1; a step of generating a three-dimensional second CT data set 25 based on a second X-ray image data set 24 acquired by X-ray imaging of a second part 42 of the subject 40 that includes a part of the first part 41 together with the positioning elements 30 positioned in the overlapping area 26 by using the image capturer 1; and a step of aligning the first CT data set 23 with the second CT data set 25 based on the three positioning elements 30 having the isotropic shapes and included in the first CT data set 23 and the second CT data set 25.

Accordingly, even if positions of parts of a subject is deviated between CT data sets due to an inclination of a subject placement part 61, movement (drift) of an X-ray focus, or the like, the first CT data set 23 can be accurately aligned with the second CT data set 25 based on the three positioning elements 30 positioned in the overlapping area 26 overlapping between the first CT data set 23 and the second CT data set 25. Also, in the first and second CT data sets 23 and 25 generated based on the X-ray image data sets acquired by X-ray imaging of the subject while rotating the positioning elements 30, because each positioning element 30 has an isotropic shape, a center position of each positioning element 30 can be accurately acquired. Accordingly, the first CT data set 23 can be accurately aligned with the second CT data set 25 based on the positioning elements 30 each of which has the isotropic shape as compared with the best-fit technique, which can include errors in shape data. For these reasons, it is possible to accurately align the first CT data set 23 with the second CT data set 25. Consequently, it is possible to accurately align a plurality of CT data sets.

In this embodiment, as described above, the X-ray imaging apparatus 100 includes an image processor 11 configured to generate CT data based on a plurality of X-ray image data sets of the imaging of the subject at a plurality of angles corresponding to different relative angles between the subject 40 and the image capturer 1, wherein the image processor 11 is configured to generate a three-dimensional first CT data set 23 based on a first X-ray image data set 22 acquired by X-ray imaging of a first part 41 of the subject 40 together with three positioning elements 30 having isotropic shapes by using the image capturer 1, to generate a three-dimensional second CT data set 25 based on a second X-ray image data set 24 acquired by X-ray imaging of a second part 42 of the subject 40 that includes an overlapping area 26 overlapping an imaging area of the first CT data set 23 and a part of the first part 41 together with the three positioning elements 30 positioned in the overlapping area 26 by using the image capturer 1, and to align the first CT data set 23 with the second CT data set 25 based on the positioning elements 30 having the isotropic shapes and included in the first CT data set 23 and the second CT data set 25.

Accordingly, similar to the aforementioned three-dimensional image data alignment method, even if positions of parts of a subject is deviated between CT data sets due to an inclination of a subject placement part 61, movement (drift) of an X-ray focus, or the like, the first CT data set 23 can be accurately aligned with the second CT data set 25 based on the three positioning elements 30 positioned in the overlapping area 26 overlapping between the first CT data set 23 and the second CT data set 25. Also, in the first and second CT data sets 23 and 25 generated based on the X-ray image data sets acquired by X-ray imaging of the subject while rotating the positioning elements 30, because each positioning element 30 has an isotropic shape, a center position of each positioning element 30 can be accurately acquired. Accordingly, the first CT data set 23 can be accurately aligned with the second CT data set 25 based on the positioning elements 30 each of which has the isotropic shape as compared with the best-fit technique, which can include errors in shape data. For these reasons, it is possible to accurately align the first CT data set 23 with the second CT data set 25. Consequently, it is possible to provide an X-ray imaging apparatus 100 capable of accurately aligning a plurality of CT data sets.

In addition, following additional advantages can be obtained by the aforementioned embodiment added with configurations discussed below.

That is, in this embodiment, as discussed above, the positioning elements 30 have point-symmetrical shapes symmetric with respect to centers of the positioning elements 30 as the isotropic shapes; and the first CT data set 23 is aligned with the second CT data set 25 based on the point-symmetrical shapes of the positioning elements 30 in the step of aligning. Because each positioning element 30 has the point-symmetrical shape, it is possible to more accurately acquire the center positions of the positioning elements 30 in the first CT data set 23 and the second CT data set 25. Consequently, it is possible to more accurately align the first CT data set 23 with the second CT data set 25.

In this embodiment, as described above, the positioning elements 30 have spherical shapes as the point-symmetrical shapes symmetric with respect to the centers; and the first CT data set 23 is aligned with the second CT data set 25 based on the center positions of the spherical positioning elements 30 in the step of aligning. Because each positioning element 30 has the spherical shape, it is possible to easily and accurately acquire the center positions of the positioning elements 30. Consequently, it is possible to easily and accurately align the first CT data set 23 with the second CT data set 25.

In this embodiment, as described above, in the step of aligning, a first distance 34 between two positioning elements 30 in the three positioning elements 30 in the first CT data set 23 and a second distance 35 between the two positioning elements 30 corresponding to the first distance 34 in the second CT data set 25 are acquired; and the first CT data set 23 is aligned with the second CT data set 25 by enlarging or reducing at least one of the first CT data set 23 and the second CT data set 25 so as to make the first distance 34 agree with the second distance 35. Accordingly, even in a case in which the subject magnification of the first CT data set 23 disagrees with the subject magnification of the second CT data set 25, the subject magnification of the first CT data set 23 can be made agree with the subject magnification of the second CT data set 25 by enlarging or reducing one of the first CT data set 23 and the second CT data set 25 so as to make the first distance 34 agree with the second distance 35. Consequently, the first CT data set 23 can be more accurately aligned with the second CT data set 25 corresponding to a subject magnification different from a subject magnification corresponding to the first CT data set by making subject magnifications agree with each other.

In this embodiment, as described above, the center positions of the three positioning elements 30 are not aligned on one linear line but lie in one plane. Accordingly, dissimilar to a case in which the positions of the positioning elements 30 are aligned on one linear line, when the first CT data set 23 is aligned with the second CT data set 25 based on the positioning elements 30, positions of the subject 40 and angles (inclinations) of the subject 40 in the first and second CT data sets can be made agree with each other by matching the planes in the first and second CT data sets to each other. Consequently, it is possible to still more accurately align the first CT data set 23 with the second CT data set 25.

In this embodiment, as described above, the method further includes a step of acquiring the first X-ray image data set 22 and the second X-ray image data set 24 by X-ray imaging with a positioning tool 50 that includes three positioning elements 30 being held to a subject placement part 61 rotating about a rotation axis orthogonal to a linear line that connects an X-ray source 2 to a detector 3. Accordingly, it is possible to avoid directly fixing the positioning elements 30 to the subject 40 and to position the positioning elements 30 around the subject 40. As a result, because boundaries between the positioning elements 30 and the subject 40 is clear, the subject 40 can be easily visually recognized.

In this embodiment, as described above, the positioning tool 50 is formed of a cylindrical tubular element that includes the three positioning elements 30, and surrounds the subject 40. Accordingly, it is possible to position the three positioning elements 30 so as to surround the subject 40. As a result, because the cylindrical tubular element is used, the three positioning elements 30 can be easily positioned around the subject 40 so as to be spaced away from each other.

In this embodiment, as described above, in the step of generating the second CT data set 25, the second CT data set is generated so as to include, as the overlapping area 26 overlapping the imaging area of the first CT data set 23, a first area 26a overlapping the imaging area of the first CT data set in an axial direction of the rotation axis of the subject 40 orthogonal to the linear line, which connects the X-ray source 2 to the detector 3. Consequently, it is possible to accurately align the first CT data set 23 and the second CT data set 25, which are sequentially generated by X-ray imaging of the subject 40 along the axial direction of the rotation axis of the subject, with each other.

### Modified Embodiments

Note that the embodiment disclosed this time must be considered as illustrative in all points and not restrictive. The scope of the present invention is not shown by the above description of the embodiments but by the scope of claims for patent, and all modifications (modified examples) within the meaning and scope equivalent to the scope of claims for patent are further included.

While the example in which the positioning elements are positioned in the overlapping area 26 in which the imaging area of the first CT data set 23 and the imaging area of the second CT data set 25 overlap each other, and two CT data sets of the first CT data set 23 and the second CT data set 25 are aligned with each other based on the positioning elements has been shown in the aforementioned embodiment, the present invention is not limited to this. For example, alternatively, three or more CT data sets can be aligned with each other.

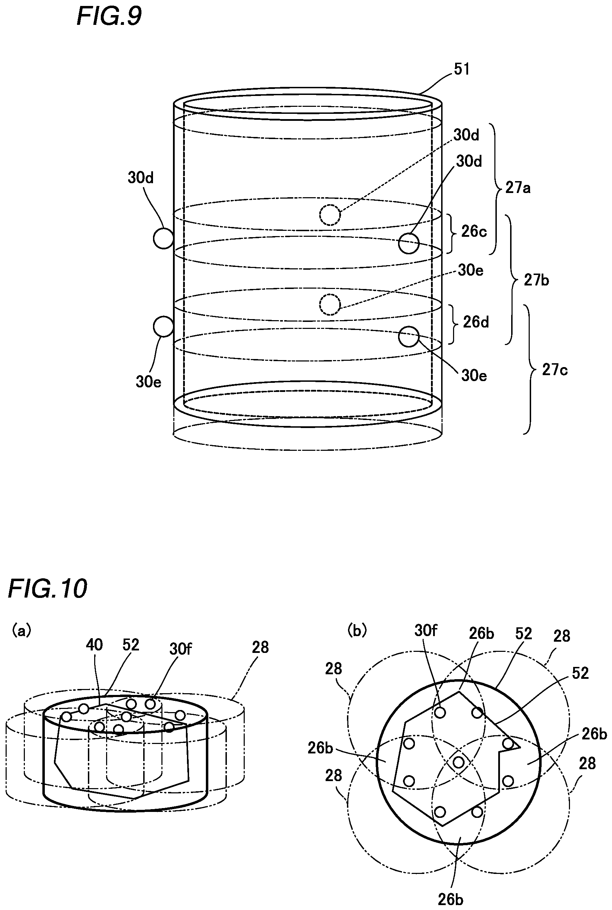

FIG. 9 is a schematic view of a first modified embodiment showing an exemplary positioning tool 51 and exemplary positioning elements 30d and 30e for illustrating alignment of three CT data sets. The positioning tool 51 includes three positioning elements 30d belonging to a first group, and three positioning elements 30e belonging to a second group. The three positioning elements 30d of the first group are positioned at positions corresponding to an overlapping area 26c in which an imaging area of a third CT data set (imaging area 27a of third X-ray image data set) overlaps an imaging area of a fourth CT data set (imaging area 27b of fourth X-ray image data set). Also, the three positioning elements 30e of the second group are positioned at positions corresponding to an overlapping area 26d in which the imaging area of the fourth CT data set (imaging area 27b of fourth X-ray image data set) overlaps an imaging area of a fifth CT data set (imaging area 27c of fifth X-ray image data set). Also, the image processor is configured to align the third CT data set with the fourth CT data set based on the positioning elements 30d belonging to the first group, and to align the fourth CT data set with the fifth CT data set based on the positioning elements 30e belonging to the second group. Also, four or more CT data sets can be aligned with each other similar to the alignment of the three CT data sets. A relative positional relationship between the three positioning elements 30d belonging to the first group can be similar to or different from a relative positional relationship between the three positioning elements 30e belonging to the second group.

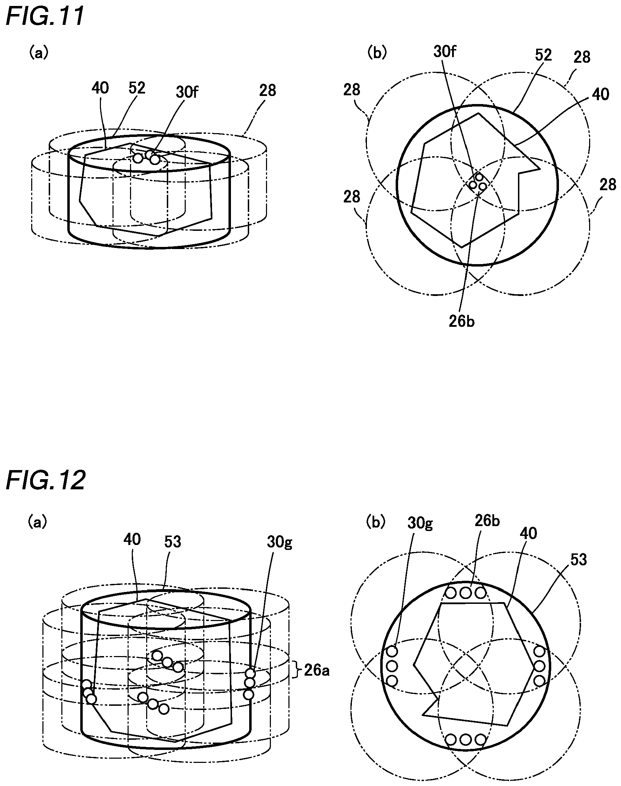

While the example in which the overlapping area that overlaps the imaging area of the first CT data set (the imaging area of the first X-ray image data set) includes the first area 26a overlapping the imaging area of the first CT data set in the axial direction of a rotation axis of the subject orthogonal to a linear line that connects the X-ray source to the detector has been shown in the aforementioned embodiment, the present invention is not limited to this. For example, alternatively, as shown in FIGS. 10 and 11, which are view illustrating a second modified embodiment, a CT data set is generated so as to include, as the overlapping area overlapping the imaging area of the first CT data set (the imaging area of the first X-ray image data set), a second area 26b overlapping the imaging area of the first CT data set in a horizontal plane that includes the linear line, which connects the X-ray source to the detector. Also, in the second modified embodiment, three or more CT data sets can be aligned with each other similar to the first modified embodiment. FIGS. 10 and 11 are the view illustrating an exemplary positioning tool 52 and exemplary positioning elements 30f for alignment of imaging areas of four CT data sets (the imaging areas of four X-ray image data sets 28).

In this case, the positioning elements 30f are positioned at positions in the positioning tool 52 corresponding to the second area 26b in which the imaging areas of the CT data sets overlap each other. The positioning tool can include at least three positioning elements 30f in the second area 26b in which the imaging areas of at least two CT data sets to be aligned with each other overlap each other. For example, the positioning tool 52 can include the three positioning elements 30f in the second area 26b in which the imaging areas of two CT data to be aligned with each other overlap each other as shown in FIG. 10, or the positioning tool 52 can include the three positioning elements 30f in the second area 26b in which the imaging areas of all four CT data sets to be aligned with each other overlap each other as shown in FIG. 11.

In the above second modified embodiment, in the step of generating the second CT data set, the second CT data set is generated so as to include, as the overlapping area overlapping the imaging area of the first CT data set, the second area overlapping the imaging area of the first CT data set in a horizontal plane that includes the linear line, which connects the X-ray source to the detector. Consequently, it is possible to accurately align the first CT data set and the second CT data set, which are sequentially generated by X-ray imaging of the subject along the horizontal plane, which includes the linear line connecting the X-ray source to the detector.

Also, in a third modified embodiment shown in FIG. 12, a CT data set is generated so as to include the positioning tools 53, and as the overlapping area overlapping the imaging area of the first CT data set, both the first area 26a overlapping the imaging area of the first CT data set in the axial direction of the rotation axis of the subject orthogonal to the linear line, which connects the X-ray source to the detector, and the second area 26b overlapping the imaging area of the first CT data set in a horizontal plane that includes the linear line, which connects the X-ray source to the detector.

While the example in which the first CT data set is aligned with the second CT data set based on the three positioning elements positioned at positions corresponding to the overlapping area of the positioning tool has been shown in the aforementioned embodiment, the present invention is not limited to this. For example, alternatively, the first CT data set can be aligned with the second CT data set based on four or more positioning elements positioned at positions corresponding to the overlapping area of the positioning tool.

While the example in which the positioning elements are fixed on the exterior surface of the positioning tool has been shown in the aforementioned embodiment, the present invention is not limited to this. For example, alternatively, the positioning elements can be fixed on an interior surface of the positioning tool. Also, the positioning elements can be fixed by fitting the positioning elements into at least three holes or at least three recessed parts in the positioning tool. Also, the positioning element can be formed by at least three recessed parts (voids) that have isotropic shapes formed in the positioning tool.

While the example in which each positioning element has the spherical shape as the point-symmetrical shape has been shown in the aforementioned embodiment, the present invention is not limited to this. For example, alternatively, the positioning element can have any of a regular hexahedron (cube shape), a regular octahedron shape, a regular dodecahedron, or a regular icosahedron shape as the point-symmetrical shape. Also, the positioning element does not necessarily have the point-symmetrical shape, for example, has a tetrahedron or a spheroid as long as it has an isotropic shape.

While the example in which the positioning elements are included in the positioning tool has been shown in the aforementioned embodiment, the present invention is not limited to this. For example, alternatively, the positioning element can be directly fixed to the subject.

While the example in which at least one of the first CT data set and the second CT data set is enlarged or reduced so as to make least one first distance agree with least one second distance in the step of aligning has been shown in the aforementioned embodiment, the present invention is not limited to this. For example, alternatively, a plurality of distances between the centers of the plurality of positioning elements can be acquired, and at least one of the first CT data set and the second CT data set can be enlarged or reduced so as to make the plurality of distances agree with each other. Also, the first CT data set can be aligned with the second CT data set based on the center positions of the positioning elements without agreement of the first distance with the second distance and without enlargement/reduction of the first CT data set and the second CT data set in the step of aligning.

While the example in which the center positions of the at least three positioning elements lie in one plane has been shown in the aforementioned embodiment, the present invention is not limited to this. For example, alternatively, the center positions of the at least three positioning elements can be aligned on one linear line.

While the example in which an occupancy ratio of one of the positioning elements is not greater than one-twentieth in a horizontal direction of the overlapping area between the imaging area of the first CT data set (the imaging area of the first X-ray image data sets) and the imaging area of the second CT data set (the imaging area of the second X-ray image data sets) has been shown in the aforementioned embodiment, the present invention is not limited to this. For example, alternatively, the occupancy ratio of one of the positioning elements can be greater than one-twentieth.

While the example in which the image processor makes a subject magnification of the first CT data set agree with a subject magnification of the second CT data set by making the first distance agree with the second distance if the first distance in the first CT data set does not agree with the second distance in the second CT data set has been shown in the aforementioned embodiment, the present invention is not limited to this. For example, alternatively, instead of a configuration that makes the first distance agree with the second distance, the image processor can have the following configuration.

For example, in a third modified embodiment, based on position coordinates of the positioning elements previously measured by a contact or non-contact three-dimensional coordinate measuring device (not shown), the image processor 11 can acquire at least one of a distance between the center of the positioning element 30a and the center of the positioning element 30b, a distance between the center of the positioning element 30a and the center of the positioning element 30c, and a distance between the center of the positioning element 30b and the center of the positioning element 30c. The image processor 11 can correct a magnification of the first CT data set 23 by making the at least one measured distance acquired between the centers agree with the first distance 34 (see FIG. 6) in the first CT data set 23, and can correct a magnification of the second CT data set 25 by making the at least one measured distance acquired between the centers agree with the second distance 35 (see FIG. 7) in the second CT data set 25. The measured distance between the centers of the positioning elements 30 previously measured can be stored in the storage 20, and the image processor 11 can be configured to acquire the measured distance between the centers of the positioning elements 30 stored in the storage 20. The three-dimensional coordinate measuring device includes a contact type measuring device that brings a probe in contact with a measurement target so as to measure the distance, a non-contact type measuring device that irradiates the measurement target with laser light or the like so as to measure the distance, and the like.

In the third modified embodiment, as discussed above, in the step of aligning, the first distance 34 between at least two positioning elements 30 in the at least three positioning elements 30 in the first CT data set 23 and the second distance 35 between the at least two positioning elements 30 corresponding to the first distance 34 in the second CT data set 25 are acquired; the measured distance between the at least two positioning elements 30 in the at least three positioning elements 30 acquired based on three-dimensional coordinate measurement of the positioning elements 30 is acquired; and the first CT data set 23 is aligned with the second CT data set 25 by enlarging or reducing the first CT data set 23 so as to make the measured distance agree with the first distance 34, and by enlarging or reducing the second CT data set 25 so as to make the measured distance agree with the second distance 35. Consequently, the first CT data set 23 can be still more accurately aligned with the second CT data set 25 corresponding to a subject magnification different from a subject magnification corresponding to the first CT data set by making subject magnifications agree with each other based on measured distance acquired by the three-dimensional coordinate measuring device.

### Modes

The aforementioned exemplary embodiment will be understood as concrete examples of the following modes by those skilled in the art.

### (Mode Item 1)

A three-dimensional image data alignment method according to mode item 1 includes a step of generating a three-dimensional first CT data set based on a first X-ray image data set acquired by X-ray imaging of a first part of a subject together with at least three positioning elements having isotropic shapes; a step of generating a three-dimensional second CT data set based on a second X-ray image data set acquired by X-ray imaging of a second part of the subject that includes an overlapping area overlapping an imaging area of the first CT data set and a part of the first part together with the at least three positioning elements positioned in the overlapping area; and a step of aligning the first CT data set with the second CT data set based on the positioning elements having the isotropic shapes and included in the first CT data set and the second CT data set.

### (Mode Item 2)

In the three-dimensional image data alignment method according to mode item 1, the positioning elements have point-symmetrical shapes symmetric with respect to centers of the positioning elements as the isotropic shapes; and the first CT data set is aligned with the second CT data set based on the point-symmetrical shapes of the positioning elements in the step of aligning.

### (Mode Item 3)

In the three-dimensional image data alignment method according to mode item 2, the positioning elements have spherical shapes as the point-symmetrical shapes symmetric with respect to the centers; and the first CT data set is aligned with the second CT data set based on the center positions of the spherical positioning elements in the step of aligning.

### (Mode Item 4)

In the three-dimensional image data alignment method according to mode item 1, in the step of aligning, a first distance between at least two positioning elements in the at least three positioning elements in the first CT data set and a second distance between the at least two positioning elements corresponding to the first distance in the second CT data set are acquired; and the first CT data set is aligned with the second CT data set by enlarging or reducing at least one of the first CT data set and the second CT data set so as to make the first distance agree with the second distance.

### (Mode Item 5)

In the three-dimensional image data alignment method according to mode item 1, the center positions of the at least three positioning elements are not aligned on one linear line but lie in one plane.

### (Mode Item 6)

In the three-dimensional image data alignment method according to mode item 1, a step of acquiring the first X-ray image data set and the second X-ray image data set by X-ray imaging with a positioning tool that includes the at least three positioning elements being held to a subject placement part rotating about a rotation axis orthogonal to a linear line that connects an X-ray source to a detector is provided.

### (Mode Item 7)

In the three-dimensional image data alignment method according to mode item 6, the positioning tool is formed of a cylindrical tubular element that includes the at least three positioning elements, and surrounds the subject.

### (Mode Item 8)

In the three-dimensional image data alignment method according to mode item 1, in the step of generating the second CT data set, the second CT data set is generated so as to include, as the overlapping area overlapping the imaging area of the first CT data set, at least a first area overlapping the imaging area of the first CT data set in an axial direction of the rotation axis of the subject orthogonal to the linear line, which connects the X-ray source to the detector.

### (Mode Item 9)

In the three-dimensional image data alignment method according to mode item 1, in the step of generating the second CT data set, the second CT data set is generated so as to include, as the overlapping area overlapping the imaging area of the first CT data set, at least a second area overlapping the imaging area of the first CT data set in a horizontal plane that includes the linear line, which connects the X-ray source to the detector.

### (Mode Item 10)

In the three-dimensional image data alignment method according to mode item 1, in the step of aligning, a first distance between at least two positioning elements in the at least three positioning elements in the first CT data set and a second distance between the at least two positioning elements corresponding to the first distance in the second CT data set are acquired; and a measured distance between the at least two positioning elements in the at least three positioning elements acquired based on three-dimensional coordinate measurement of the positioning elements is acquired; and the first CT data set is aligned with the second CT data set by enlarging or reducing the first CT data set so as to make the measured distance agree with the first distance, and by enlarging or reducing the second CT data set so as to make the measured distance agree with the second distance.

### (Mode Item 11)

An X-ray imaging apparatus according to mode item 11 include an image capturer including an X-ray source configured to irradiate a subject with X-rays and a detector configured to detect the X-rays with which the subject is irradiated by the X-ray source for imaging of the subject; and an image processor configured to generate CT data based on a plurality of X-ray image data sets of the imaging of the subject at a plurality of angles corresponding to different relative angles between the subject and the image capturer, wherein the image processor is configured to generate a three-dimensional first CT data set based on a first X-ray image data set acquired by X-ray imaging of a first part of the subject together with at least three positioning elements having isotropic shapes by using the image capturer, to generate a three-dimensional second CT data set based on a second X-ray image data set acquired by X-ray imaging of a second part of the subject that includes an overlapping area overlapping an imaging area of the first CT data set and a part of the first part together with the at least three positioning elements positioned in the overlapping area by using the image capturer, and to align the first CT data set with the second CT data set based on the positioning elements having the isotropic shapes and included in the first CT data set and the second CT data set.

### (Mode Item 12)

In the X-ray imaging apparatus according to mode item 11, a subject placement part that is arranged between the X-ray source and the detector, on which the subject is placed, and configured to be rotated about a rotation axis orthogonal to a linear line that connects the X-ray source to the detector is further provided; and the positioning elements are included in a positioning tool held by the subject placement part.

### (Mode Item 13)

In the X-ray imaging apparatus according to mode item 12, the positioning tool is formed of a cylindrical tubular element that includes the at least three positioning elements, and surrounds the subject.

## Claims

1. A three-dimensional image data alignment method comprising:
a step of generating a three-dimensional first CT data set (23) based on a first X-ray image data set (22) acquired by X-ray imaging of a first part (41) of a subject (40) together with at least three positioning elements (30) having isotropic shapes;
a step of generating a three-dimensional second CT data set (25) based on a second X-ray image data set (24) acquired by X-ray imaging of a second part (42) of the subject (40) that includes an overlapping area (26) overlapping an imaging area of the first CT data set (23) and a part of the first part (41) together with the at least three positioning elements (30) positioned in the overlapping area (26); and
a step of aligning the first CT data set (23) with the second CT data set (25) based on the positioning elements (30) having the isotropic shapes and included in the first CT data set (23) and the second CT data set (25) .

2. The three-dimensional image data alignment method according to claim 1, wherein
the positioning elements (30) have point-symmetrical shapes symmetric with respect to centers of the positioning elements (30) as the isotropic shapes; and
the first CT data set (23) is aligned with the second CT data set (25) based on the point-symmetrical shapes of the positioning elements (30) in the step of aligning.

3. The three-dimensional image data alignment method according to claim 2, wherein
the positioning elements (30) have spherical shapes as the point-symmetrical shapes symmetric with respect to the centers; and
the first CT data set (23) is aligned with the second CT data set (25) based on the center positions of the spherical positioning elements (30) in the step of aligning.

4. The three-dimensional image data alignment method according to any one of claims 1 to 3, wherein
in the step of aligning,
a first distance (34) between at least two positioning elements (30) in the at least three positioning elements (30) in the first CT data set (23) and a second distance (35) between the at least two positioning elements (30) corresponding to the first distance (34) in the second CT data set (25) are acquired; and
the first CT data set (23) is aligned with the second CT data set (25) by enlarging or reducing at least one of the first CT data set (23) and the second CT data set (25) so as to make the first distance (34) agree with the second distance (35).

5. The three-dimensional image data alignment method according to any one of claims 1 to 4, wherein the center positions of the at least three positioning elements (30) are not aligned on one linear line but lie in one plane (36) .

6. The three-dimensional image data alignment method according to and one of claims 1 to 5 further comprising a step of acquiring the first X-ray image data set (22) and the second X-ray image data set (24) by X-ray imaging with a positioning tool (50, 51, 52, 53) that includes the at least three positioning elements (30) being held to a subject placement part (61) rotating about a rotation axis orthogonal to a linear line that connects an X-ray source (2) to a detector (3).

7. The three-dimensional image data alignment method according to claim 6, wherein the positioning tool (50, 51, 52, 53) is formed of a cylindrical tubular element that includes the at least three positioning elements (30), and surrounds the subject (40).

8. The three-dimensional image data alignment method according to any one of claims 1 to 7, wherein in the step of generating the second CT data set (25), the second CT data set is generated so as to include, as the overlapping area (26) overlapping the imaging area of the first CT data set (23), at least a first area (26a) overlapping the imaging area of the first CT data set in an axial direction of the rotation axis of the subject (40) orthogonal to the linear line, which connects the X-ray source (2) to the detector (3).

9. The three-dimensional image data alignment method according to any one of claims 1 to 8, wherein in the step of generating the second CT data set (25), the second CT data set is generated so as to include, as the overlapping area (26) overlapping the imaging area of the first CT data set (23), at least a second area (26b) overlapping the imaging area of the first CT data set in a horizontal plane that includes the linear line, which connects the X-ray source (2) to the detector (3).

10. The three-dimensional image data alignment method according to any one of claims 1 to 9, wherein
in the step of aligning,
a first distance (34) between at least two positioning elements (30) in the at least three positioning elements (30) in the first CT data set (23) and a second distance (35) between the at least two positioning elements (30) corresponding to the first distance (34) in the second CT data set (25) are acquired; and
a measured distance between the at least two positioning elements (30) in the at least three positioning elements (30) acquired based on three-dimensional coordinate measurement of the positioning elements (30) is acquired; and
the first CT data set (23) is aligned with the second CT data set (25) by enlarging or reducing the first CT data set (23) so as to make the measured distance agree with the first distance (34), and by enlarging or reducing the second CT data set (25) so as to make the measured distance agree with the second distance (35).

11. An X-ray imaging apparatus (100) comprising:
an image capturer (1) including an X-ray source (2) configured to irradiate a subject (40) with X-rays and a detector (3) configured to detect the X-rays with which the subject is irradiated by the X-ray source (2) for imaging of the subject; and
an image processor (11) configured to generate CT data based on a plurality of X-ray image data sets of the imaging of the subject at a plurality of angles corresponding to different relative angles between the subject (40) and the image capturer (1), wherein
the image processor (11) is configured
to generate a three-dimensional first CT data set (23) based on a first X-ray image data set (22) acquired by X-ray imaging of a first part (41) of the subject (40) together with at least three positioning elements (30) having isotropic shapes by using the image capturer (1),
to generate a three-dimensional second CT data set (25) based on a second X-ray image data set (24) acquired by X-ray imaging of a second part (42) of the subject (40) that includes an overlapping area (26) overlapping an imaging area of the first CT data set (23) and a part of the first part (41) together with the at least three positioning elements (30) positioned in the overlapping area (26) by using the image capturer (1), and
to align the first CT data set (23) with the second CT data set (25) based on the positioning elements (30) having the isotropic shapes and included in the first CT data set (23) and the second CT data set (25).

12. The X-ray imaging apparatus according to claim 11 further comprising a subject placement part (61) that is arranged between the X-ray source (2) and the detector (3), on which the subject (40) is placed, and that is configured to be rotated about a rotation axis orthogonal to a linear line that connects the X-ray source (2) to the detector (3), wherein
the positioning elements (30) are included in a positioning tool (50, 51, 52, 53) held by the subject placement part (61).

13. The X-ray imaging apparatus according to claim 12, wherein the positioning tool (50, 51, 52, 53) is formed of a cylindrical tubular element that includes the at least three positioning elements (30), and surrounds the subject (40) .
